# EUROPÄISCHE PATENTSCHRIFT

(11) **EP 3 862 129 B1**
(45) Veröffentlichungstag und Bekanntmachung des Hinweises auf die Patenterteilung: **29.06.2022**
(21) Anmeldenummer: 21154196.6
(22) Anmeldetag: 29.01.2021
(51) Int. Cl.: B23K 26/08, B23K 26/38

(54) **VERFAHREN UND VORRICHTUNG ZUM SCHNEIDEN VON METALL**
METHOD AND DEVICE FOR CUTTING METAL
PROCÉDÉ ET DISPOSITIF DE COUPE DU MÉTAL

(30) Priorität: 06.02.2020 DE 102020103043
(43) Veröffentlichungstag der Anmeldung: 11.08.2021
(73) Patentinhaber: Automatic-Systeme Dreher GmbH, 72172 Sulz a.N. (DE)
(72) Erfinder: Haas, Reiner, 78655 Dunningen (DE); Clesle, Oliver, 72469 Meßstetten (DE); Kowalski, Jonathan, 72355 Schönberg (DE)
(74) Vertreter: Köchling, Conrad-Joachim

(56) Entgegenhaltungen:
- EP-A1- 1 447 068
- US-A1- 2016 214 207

## Beschreibung

Die Erfindung betrifft ein Verfahren und eine Vorrichtung zum Schneiden von Metall, vorzugsweise von Bandmaterial oder plattenförmigen Werkstücken.

Im Stand der Technik sind Verfahren und Vorrichtungen zum Schneiden von Bandmaterial oder plattenförmigen Werkstücken aus Metall bekannt. Dabei wird das Material über ein Obertrum einer um mindestens zwei Umlenkrollen umlaufend geführten Fördereinrichtung durch eine Vorrichtung geführt und befördert. In einem Arbeitsbereich, der zwischen den Umlenkungen des umlaufenden Förderbandes über die Länge des Obertrums verläuft, wird das Material bearbeitet, nämlich Bauteile, z.B. Platinen, ausgeschnitten. Dazu ist eine Schneidvorrichtung zum Schneiden des Materials oberhalb des Obertrums und des darüber beförderten Materials angeordnet. Das Obertrum ist in dem Schneidbereich der Schneidvorrichtung zu einem in Richtung eines Untertrums der Fördereinrichtung ausgebildeten Schacht umgelenkt. In dem Schacht ist ein Auffangbehälter zum Auffangen von Schneidabfällen angeordnet, sodass die beim Schneiden entstehenden Abfälle direkt in den unter der Schneidvorrichtung positionierten Auffangbehälter entsorgt werden und eine Verschmutzung des Förderbandes vermieden ist.

Die US 2016/214207 offenbart ein Verfahren zum Schneiden von Metall, wobei das Material über ein Obertrum einer umlaufend angetriebenen Fördereinrichtung in einer Förderrichtung transportiert wird und während des Transports durch eine oberhalb des Obertrums angeordnete Schneidvorrichtung in einem Arbeitsbereich, der über eine Länge des Obertrums verläuft, in Bauteile geschnitten wird, wobei das Obertrum im Schneidbereich der Schneidvorrichtung zu einem in Richtung des Untertrums der Fördereinrichtung ausgebildeten Schachts mit einem darin angeordneten Auffangbehälter umgelenkt wird, wobei die Schneidvorrichtung mit dem Schacht und dem Auffangbehälter eine Schneideinheit bildet.

Die bekannten Lösungen weisen den Nachteil auf, dass in dem Arbeitsbereich nicht mehrere Bauteile gleichzeitig gefertigt werden können, sondern dass immer nur ein Bauteil nach dem nächsten geschnitten werden kann, sodass in dem Arbeitsbereich in einem definierten Zeitraum nur eine relativ geringe Stückzahl gefertigt werden kann. Um die zu fertigende Stückzahl in diesem Zeitraum zu erhöhen, werden mehrere solcher Vorrichtungen parallel betrieben bzw. hintereinander angeordnet betrieben. In den Vorrichtungen können auch jeweils Bauteile mit unterschiedlichen Konturen zugeschnitten werden.

Jedoch ergibt sich der Nachteil, dass die Vorrichtungen einen entsprechend großen Raum in Anspruch nehmen.

Für den Fall, dass mehrere solcher Vorrichtungen hintereinander angeordnet betrieben werden, muss in manchen Fällen eine korrekte Schnittübergabe erfolgen, beispielsweise dann, wenn in der nachfolgenden Vorrichtung ein Schnitt weitergeführt werden soll, der in der vorgelagerten Vorrichtung nicht beendet werden konnte. Der Schnitt muss dazu an der Stelle neu angesetzt werden, an der die vorgelagerte Vorrichtung den Schnitt beendet hat. Damit solche Produkte eine ausreichende Qualität aufweisen, müssen die Schnittübergaben exakt berechnet und ausgeführt werden.

Die Aufgabe der Erfindung liegt somit darin, ein Verfahren und eine Vorrichtung bereitzustellen mit dem bzw. mit der möglichst viele Bauteile mit einer ausgezeichneten Qualität in kurzer Zeit geschnitten werden können, wobei die Vorrichtung eine besonders kompakte Bauform aufweisen soll. Zudem soll ein Schneiden unterschiedlicher Konturen ermöglicht sein, sodass ein möglichst geringer Verschnitt entsteht.

Zur Lösung der Aufgabe schlägt die Erfindung ein Verfahren zum Schneiden von Metall, vorzugsweise von Bandmaterial oder plattenförmigen Werkstücken, vor, wobei das Material über ein Obertrum einer umlaufend angetriebenen Fördereinrichtung in einer Förderrichtung transportiert wird und während des Transports durch mindestens zwei oberhalb des Obertrums angeordnete Schneidvorrichtungen in einem Arbeitsbereich, der über eine Länge des Obertrums verläuft, in Bauteile geschnitten wird, wobei das Obertrum jeweils in den Schneidbereichen der Schneidvorrichtungen zu einem in Richtung des Untertrums der Fördereinrichtung ausgebildeten Schachts mit einem darin angeordneten Auffangbehälter umgelenkt wird, wobei jede Schneidvorrichtung mit einem Schacht und einem Auffangbehälter eine Schneideinheit bildet, und sich die mindestens zwei Schneideinheiten unabhängig voneinander im gesamten Arbeitsbereich bewegen und während eines Schneidzyklus voneinander unterschiedliche oder auch gleiche Konturen schneiden.

Die Schneideinheiten werden unabhängig voneinander in dem Arbeitsbereich bewegt, sodass jede Schneidvorrichtung eine von der weiteren Schneidvorrichtung unterschiedliche oder auch gleiche Kontur schneidet. Es können zwei oder mehr Schneidvorrichtungen vorgesehen sein, die in dem Arbeitsbereich gleichzeitig schneiden. Die Schneidvorrichtungen bewegen sich in dem gesamten Arbeitsbereich.

Die Fördereinrichtung kann ein umlaufendes Förderband sein, welches über mindestens zwei gegenüberliegend angeordnete Umlenkrollen geführt ist. Alternativ kann die Fördereinrichtung auch ein Zahnriemen oder ein Gurtband sein. Der Arbeitsbereich ist durch den Bereich zwischen den Umlenkrollen gebildet und durch diese begrenzt.

Die Schneidvorrichtungen können so programmiert werden, dass sie unterschiedliche Konturen schneiden. Dabei können die Schneidvorrichtungen gleichzeitig ein Bauteil in dem Arbeitsbereich ausschneiden, sodass eine besonders schnelle Fertigstellung von Bauteilen erreicht wird und in kurzer Zeit eine Vielzahl von Bauteilen fertiggestellt werden kann. Alternativ kann jede Schneidvorrichtung ein Bauteil zuschneiden, wobei jede Schneidvorrichtung eine Kontur schneidet, die sich von der zu schneidenden Kontur jeder weiteren Schneidvorrichtung unterscheidet, sodass Bauteile mit unterschiedlichen Konturen zugeschnitten werden. Beispielsweise können die Konturen der Bauteile so aufeinander abgestimmt sein, sodass möglichst wenig Materialverschnitt und damit Abfall entsteht.

Das Obertrum wird gegenüber den Schneidvorrichtungen jeweils zu einem Schacht umgelenkt, in dem ein Auffangbehälter angeordnet ist. Der Auffangbehälter fängt den beim Schneiden des Materials anfallenden Schneidabfall auf, sodass sich dieser Abfall nicht auf dem Förderband ablagert und das nachfolgend damit transportierte Material verschmutzt. Im Bereich der Schächte entstehen durch die Umlenkung des Förderbandes Aussparungen in der Förderebene des Obertrums, wobei das Material über die Aussparungen geführt ist und jeweils eine Aussparung gegenüber einer Schneidvorrichtung angeordnet ist. Das Material liegt somit im Schneidbereich der Schneidvorrichtungen nicht auf dem Förderband auf, und eine Beschädigung des Förderbandes durch die Schneidvorrichtungen wird vermieden.

Dadurch, dass die Schneidvorrichtungen das Material in dem gemeinsamen Arbeitsbereich gleichzeitig bearbeiten, kann das Verfahren in einer besonders kompakten Vorrichtung betrieben werden.

Bevorzugt ist dabei vorgesehen, dass das Material kontinuierlich transportiert wird und das Zuschneiden der Bauteile während des kontinuierlichen Transportes erfolgt.

Durch die unabhängig voneinander arbeitenden Schneidvorrichtungen ist es möglich, das Verfahren bei einem kontinuierlichen Transport des Materials durchzuführen und dabei unterschiedlich konturierte Bauteile zu erzeugen. Es können in kurzer Zeit eine Vielzahl von Bauteilen fertiggestellt werden.

Auch ist bevorzugt vorgesehen, dass während eines Schneidzyklus mindestens ein Bauteil geschnitten wird.

Sofern die mindestens zwei Schneidvorrichtungen ein Bauteil schneiden, kann während eines Schneidzyklus ein Bauteil fertiggestellt werden. Das Bauteil kann eine asymmetrische Form aufweisen, da die Schneidvorrichtungen unabhängig voneinander unterschiedliche Konturen schneiden können.

Alternativ ist vorgesehen, dass während eines Schneidzyklus mehrere Bauteile mit unterschiedlichen Konturen geschnitten werden.

Für den Fall, dass jede Schneidvorrichtung ein Bauteil schneidet, können während des Schneidzyklus mehrere Bauteile fertiggestellt werden. Vorzugsweise wird während des Zyklus eine der Anzahl der Schneidvorrichtungen entsprechende Zahl an Bauteilen fertiggestellt.

Zudem ist vorzugsweise vorgesehen, dass das Obertrum zumindest zwischen den Schneideinheiten abgestützt wird, wobei eine Stütze an die Schneideinheiten deren Abstand voneinander folgend angekoppelt wird, die bei einer Bewegung der Schneideinheiten voneinander weg auseinandergestreckt wird und bei einer Bewegung der Schneideinheiten aufeinander zu komprimiert wird und jeweils den Bereich des Obertrums zwischen den Schneideinheiten abstützt.

Durch die Stütze wird das Obertrum in der Förderebene gehalten und ein Durchhängen des Förderbandes ist verhindert. Auf diese Weise wird sichergestellt, dass das Material gleichmäßig auf dem Förderband aufliegt.

Zur Lösung der Aufgabe schlägt die Erfindung des Weiteren eine Vorrichtung vor, wobei die Vorrichtung eine bandförmige um mindestens zwei Umlenkrollen umlaufend geführte Fördereinrichtung mit einem Obertrum und einem Untertrum aufweist, wobei das Material über das Obertrum in einer Förderrichtung durch die Vorrichtung geführt und befördert ist und in einem Arbeitsbereich, der zwischen den Umlenkungen des umlaufenden Förderbandes über die Länge des Obertrums verläuft, bearbeitet ist, wobei die Vorrichtung mindestens zwei Schneidvorrichtungen zum Schneiden des Materials aufweist, die oberhalb des Obertrums und des darüber beförderten Materials angeordnet sind, und wobei das Obertrum jeweils in den Schneidbereichen der Schneidvorrichtungen zu einem in Richtung des Untertrums ausgebildeten Schachts umgelenkt ist, in dem jeweils ein Auffangbehälter zum Auffangen von Schneidabfällen angeordnet ist, wobei jede Schneidvorrichtung mit einem Schacht und einem Auffangbehälter zu einer Schneideinheit gekoppelt ist, und die Schneideinheiten unabhängig voneinander im gesamten Arbeitsbereich beliebig bewegbar angeordnet sind, wobei mit den Schneideinheiten voneinander unterschiedliche oder auch gleiche Konturen geschnitten sind.

Die mindestens zwei Schneidvorrichtungen sind zwar unabhängig voneinander in der Vorrichtung bewegbar, wobei jedoch eine Begrenzung der Bewegung darin besteht, dass die Schneidvorrichtungen sich im Arbeitsbereich in Förderrichtung oder entgegengesetzt der Förderrichtung des Materials nicht gegenseitig überholen können. Die Schneidvorrichtungen können das Material somit ausschließlich nebeneinander oder hintereinander bearbeiten.

Beide Schneidvorrichtungen sind mit einem jeweils zugehörigen Schacht und einem Auffangbehälter zu einer Schneideinheit gekoppelt, wobei jede Schneideinheit als eine gesamte Einheit in Förderrichtung, quer dazu und entgegengesetzt der Förderrichtung bewegbar ist. Dadurch können beim Schneiden der Bauteile die Schneidabfälle unmittelbar in den Auffangbehälter gelangen und eine Verschmutzung der Fördereinrichtung sowie des Materials ist vermieden.

Die Schneidvorrichtungen sind so programmierbar bzw. programmiert, dass sie unterschiedliche Konturen schneiden. Dadurch ist es möglich, dass die Schneidvorrichtungen gleichzeitig ein Bauteil ausschneiden und somit eine besonders schnelle Fertigstellung des Bauteils erreicht ist. Es können in kurzer Zeit eine Vielzahl von Bauteilen fertiggestellt werden. Alternativ besteht auch die Möglichkeit, dass beide Schneidvorrichtungen gleichzeitig unterschiedliche Bauteile zuschneiden. Beispielsweise können die Konturen der Bauteile so aufeinander abgestimmt sein, sodass möglichst wenig Materialverschnitt und damit Abfall entsteht.

Unter den Schneidvorrichtungen bildet das Obertrum jeweils einen Schacht, in dem ein Auffangbehälter angeordnet ist. Durch die Schächte sind in der Förderebene des Obertrum Aussparungen gebildet über die das Material geführt ist, und zwar ist jeweils eine Aussparung unter einer Schneidvorrichtung angeordnet, sodass das Schneidmittel während des Schneidens nur das Material durchtrennt und nicht das Förderband beschädigt oder durchtrennt.

Bevorzugt ist vorgesehen, dass die Schneidvorrichtungen Laserschneider sind.

Zudem ist vorzugsweise vorgesehen, dass die Schächte v-förmig sind.

Alternativ ist vorgesehen, dass die Schächte u-förmig sind.

Ein u- oder v-förmiger Schacht bietet die Möglichkeit einen Auffangbehälter in dem Schacht anzuordnen.

Auch ist bevorzugt vorgesehen, dass das Obertrum zwischen den Schneideinheiten durch eine unterhalb des Obertrums angeordnete Stütze gehalten ist, wobei vorzugsweise vorgesehen ist, dass die Stütze an die Schneideinheiten deren unterschiedlichem Abstand voneinander folgend gekoppelt ist, wobei die Stütze bei voneinander entfernt angeordneten Schneideinheiten gestreckt ist und bei angenäherten Schneideinheiten komprimiert ist, wobei der Bereich des Obertrums zwischen den Schneideinheiten stets durch die Stütze abgestützt ist.

Durch die Stütze ist ein Durchhängen des Obertrums verhindert und das Bandmaterial liegt gleichmäßig auf dem Obertrum auf.

Ein Ausführungsbeispiel des erfindungsgemäßen Verfahrens und einer erfindungsgemäßen Vorrichtung ist in den Figuren gezeigt und im Folgenden näher beschrieben.

Es zeigt:
- Fig. 1: eine schematische Darstellung einer Vorrichtung in Seitenansicht;
- Fig. 2: einen Ausschnitt mit einer Stütze in einer komprimierten Lage;
- Fig. 3: den Ausschnitt der Vorrichtung mit einer Stütze in einer gestreckten Lage;
- Fig. 4: einen möglichen Ablauf des Verfahrens in zeitlicher Abhängigkeit;
- Fig. 5: einen weiteren möglichen Ablauf des Verfahrens in zeitlicher Abhängigkeit.

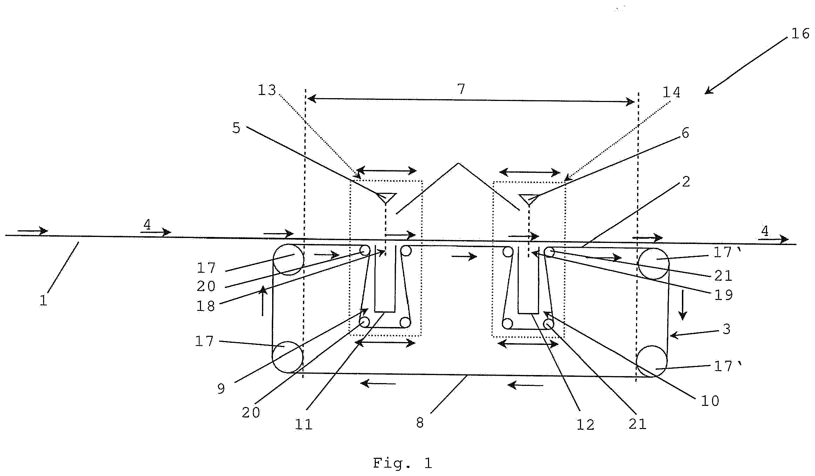

Fig. 1 zeigt eine Vorrichtung 16 zum Schneiden von Bandmaterial 1 aus Metall, wobei die Vorrichtung 16 eine bandförmige um sich gegenüberliegende Paare von Umlenkrollen 17,17' umlaufend geführte Fördereinrichtung 3 mit einem Obertrum 2 und einem Untertrum 8 aufweist. Das Bandmaterial 1 ist über das Obertrum 2 in einer Förderrichtung 4 durch die Vorrichtung 16 geführt und befördert. In einem Arbeitsbereich 7, der zwischen den Paaren von Umlenkrollen 17,17' des umlaufenden Förderbandes 3 über die gesamte Länge des Obertrums 2 verläuft, wird das Bandmaterial 1 bearbeitet, nämlich in Bauteile, z.B. Platinen, geschnitten. Die Vorrichtung 16 weist dazu zwei Laserschneider als Schneidvorrichtungen 5,6 auf, die oberhalb des Obertrums 2 und des darüber beförderten Bandmaterials 1 angeordnet sind.

In den Schneidbereichen der Schneidvorrichtungen 5,6 ist das Obertrum 2 jeweils zu einem in Richtung des Untertrums 8 ausgebildeten Schachts 9,10 umgelenkt, wobei in den Schächten 9,10 jeweils ein Auffangbehälter 11,12 zum Auffangen von Schneidabfällen angeordnet ist. Es ist jeweils eine Schneidvorrichtung 5,6 mit einem Schacht 9,10 und einem Auffangbehälter 11,12 zu einer Schneideinheit 13,14 gekoppelt, sodass die Schneidvorrichtung 5 samt Schacht 9 und Auffangbehälter 11 und die Schneidvorrichtung 6 samt Schacht 10 und Auffangbehälter 12 im Arbeitsbereich bewegt wird. Die Schneideinheiten 13,14 sind unabhängig voneinander bewegbar, sodass mit diesen voneinander unterschiedliche Konturen zugeschnitten werden können. Dabei sind die Schneidvorrichtungen 5,6 im gesamten Arbeitsbereich 7 beliebig bewegbar angeordnet. Die Schächte 9,10 und Auffangbehälter 11,12 sind mindestens über die gesamte Breite des Bandmaterials 1 ausgebildet und sind in Förderrichtung 4 und entgegengesetzt der Förderrichtung 4 bewegbar, wobei sie den Bewegungen der Schneidvorrichtungen 5,6 stets folgen.

Eine Begrenzung der Bewegung der Schneideinheiten 13,14 besteht lediglich darin, dass die Schneideinheiten 13,14 sich in Förderrichtung 4 und entgegengesetzt der Förderrichtung 4 des Bandmaterials 1 nicht gegenseitig überholen können. Die Schneidvorrichtungen 5,6 können das Bandmaterial 1 ausschließlich nebeneinander oder hintereinander bearbeiten.

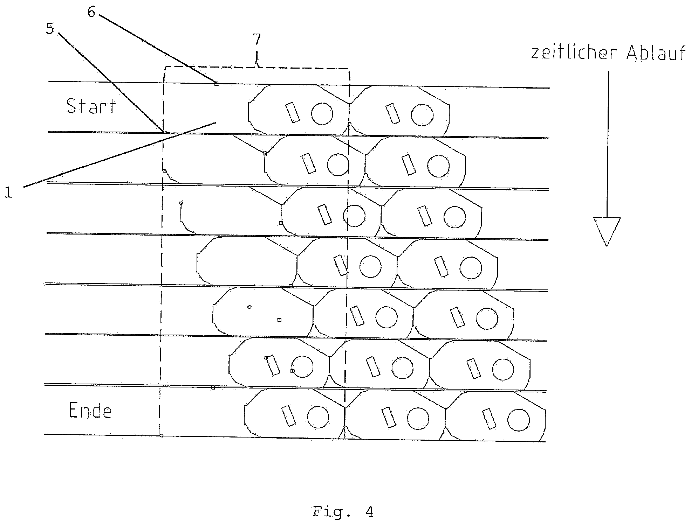

Beide Schneidvorrichtungen 5,6 sind so programmiert, dass sie gleiche oder voneinander unterschiedliche Konturen schneiden. In Fig. 4 ist das Schneiden der Konturen beispielhaft gezeigt. Es zeigt Fig. 4 den Ablauf eines Verfahrens für den Arbeitsbereich 7 des Bandmaterials 1 in einer zeitlichen Abfolge. Das Bandmaterial 1 ist in einer Draufsicht in zeitlich aufeinander folgenden Abschnitten gezeigt. Die Schneidvorrichtungen 5,6 sind durch einen Kreis (erste Schneidvorrichtung) und ein Quadrat (zweite Schneidvorrichtung) dargestellt. Die erste Schneidvorrichtung 5 beginnt den Schneidvorgang an der unteren Randkante des Bandmaterials 1. Die zweite Schneidvorrichtung 6 beginnt den Schneidvorgang an der oberen Randkante des Bandmaterials 1.

In den zeitlich aufeinander folgenden Schritten ist ersichtlich, dass die Schneidvorrichtungen 5,6 in dem Arbeitsbereich 7 unterschiedliche Bewegungen durchführen, um die Konturen abzufahren und zu schneiden, wobei beide Schneidvorrichtungen 5,6 gleichzeitig ein Bauteil ausschneiden können. Dadurch ist eine besonders schnelle Fertigstellung des Bauteils erreicht und es können in kurzer Zeit eine Vielzahl von Bauteilen fertiggestellt werden.

Alternativ können beide Schneidvorrichtungen 5,6 gleichzeitig unterschiedliche Bauteile schneiden.

Beispielsweise können die zu schneidenden Bauteilkonturen so aufeinander abgestimmt sein, dass möglichst wenig Materialverschnitt und damit Abfall entsteht.

Die Schneidvorrichtungen 5,6 bewegen sich in dem Arbeitsbereich 7, der im gesamten Bereich zwischen den Umlenkrollen 17 des Fördermittels 3 angeordnet ist.

Dadurch, dass die Schneidvorrichtungen 5,6 das Bandmaterial 1 gleichzeitig in dem gemeinsamen Arbeitsbereich 7 bearbeiten, kann das Verfahren in einer besonders kompakten Vorrichtung 16 betrieben werden, wobei während eines Schneidzyklus eine Vielzahl von Bauteilen fertiggestellt werden kann.

Wie Fig. 1 zeigt, bildet das Obertrum 2 gegenüber den Schneidvorrichtungen 5,6 jeweils einen u-förmigen Schacht 9,10, in dem ein Auffangbehälter 11,12 angeordnet ist. In dem Auffangbehälter 11,12 wird der beim Schneiden des Bandmaterials 1 anfallende Schneidabfall aufgefangen, sodass sich dieser Abfall nicht auf dem Förderband 3 ablagert und das nachfolgend damit transportierte Bandmaterial 1 verschmutzt. Durch die Schächte 9,10 sind in der Förderebene des Obertrum 2 Aussparungen 18,19 gebildet über die das Bandmaterial 1 geführt ist, und zwar ist jeweils eine Aussparung 18,19 unter einer Schneidvorrichtung 5,6 angeordnet, sodass das Schneidmittel während des Schneidens nur das Bandmaterial 1 durchtrennt und nicht das Förderband 3 beschädigt oder durchtrennt.

Beide Schneidvorrichtungen 5,6 sind mit dem jeweils zugehörigen Schacht 9,10 und Auffangbehälter 11,12 zu einer Schneideinheit 13,14 gekoppelt, wobei jede Schneideinheit 13,14 als eine gesamte Einheit in Förderrichtung 4, quer dazu und entgegengesetzt der Förderrichtung 4 bewegt werden kann. Auch die gegenüber den Schneidmitteln vorgesehene Aussparung 18,19 wird entsprechend mitbewegt.

Der u-förmige Schacht 9,10 bietet einen ausreichenden Platz für den Auffangbehälter 11,12. Um das Förderband 3 zu dem u-förmigen Schacht 9,10 umzulenken sind vier weitere Umlenkrollen 20,21 vorgesehen.

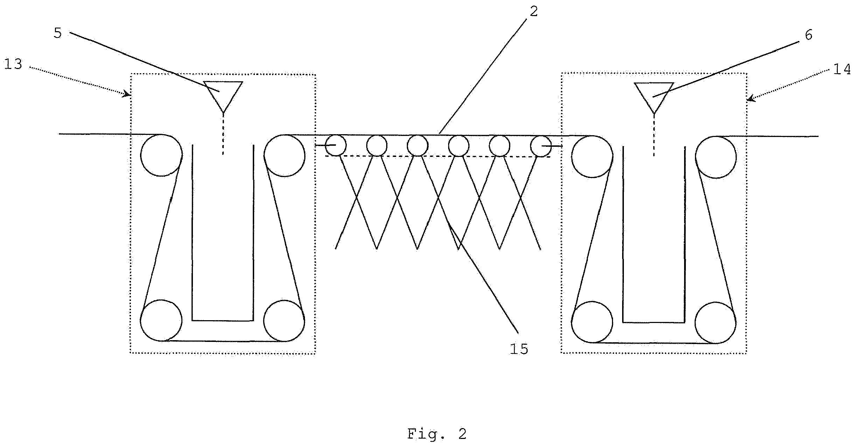

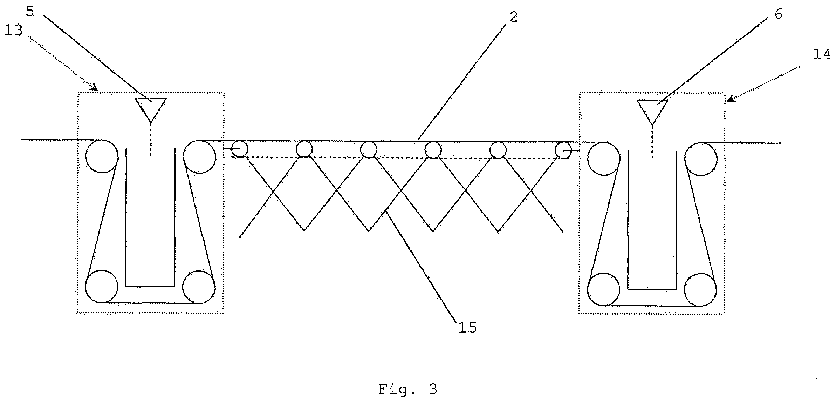

In den Fig. 2 und 3 ist eine Vorrichtung 16 mit einer längenveränderlichen Stütze 15 gezeigt. Das Obertrum 2 ist zwischen den Schneideinheiten 13,14 durch die unterhalb des Obertrums 2 angeordnete Stütze 15 gehalten. Die Stütze 15 ist an die Schneideinheiten 13,14 gekoppelt, wobei die Stütze 15 bei voneinander entfernt angeordneten Schneideinheiten 13,14 gestreckt ist, wie es in Fig. 3 gezeigt ist und bei angenäherten Schneideinheiten 13,14 komprimiert ist, wie es in Fig. 2 gezeigt ist, wobei der Bereich des Obertrums 2 zwischen den Schneideinheiten 13,14 durch die Stütze 15 optimal abgestützt ist. Dadurch ist ein Durchhängen des Obertrums 2 verhindert und das Bandmaterial 1 liegt immer gleichmäßig auf dem Obertrum 2 auf. Dadurch können die Bauteile exakt zugeschnitten werden und es entstehen Produkte mit einer besonders guten Qualität. Die Stütze 15 kann der Bewegung der Schneideinheiten 13,14 aufeinander zu und voneinander weg zwingend folgen. Die Stütze 15 ist nach Art eines Scherengitters ausgebildet, wie in den Fig. gezeigt.

Mit dieser Vorrichtung 16 kann ein Verfahren zum Schneiden von Bandmaterial 1 aus Metall durchgeführt werden, wobei das Bandmaterial 1 über das Obertrum 2 der umlaufend angetriebenen Fördereinrichtung 3 in Förderrichtung 4 transportiert wird und während des Transports durch die oberhalb des Obertrums 2 angeordneten Schneidvorrichtungen 5,6 im Arbeitsbereich 7 in Bauteile geschnitten wird. Das Obertrum 2 wird jeweils in den Schneidbereichen der Schneidvorrichtungen 5,6 zu dem in Richtung des Untertrums 8 der Fördereinrichtung 3 ausgebildeten Schacht 9,10 mit einem darin angeordneten Auffangbehälter 11,12 umgelenkt, wobei die Schneidvorrichtungen 5,6 jeweils mit einem Schacht 9,10 und einem Auffangbehälter 11,12 eine Schneideinheit 13,14 bilden, und sich die zwei Schneideinheiten 13,14 unabhängig voneinander im gesamten Arbeitsbereich 7 bewegen und während eines Schneidzyklus voneinander unterschiedliche Konturen schneiden können.

Wie in Fig. 4 gezeigt, kann mit dem Verfahren während eines Schneidzyklus ein Bauteil, z.B. eine Platine mit Ausschnitten, geschnitten werden, wobei beide Schneidvorrichtungen 5,6 unterschiedliche Konturen in dem Arbeitsbereich 7 abfahren und schneiden. Auf diese Weise kann in kurzer Zeit eine Vielzahl von Bauteilen geschnitten werden.

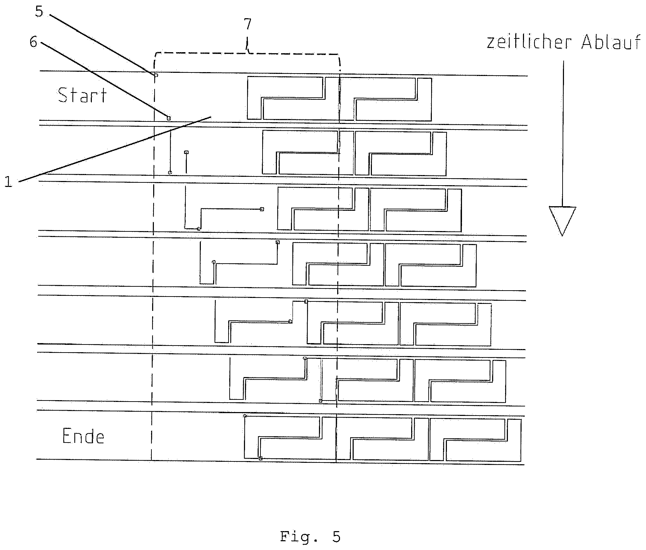

Fig. 5 zeigt ein weiteres Beispiel für den Ablauf des Verfahrens, wobei während eines Schneidzyklus zwei Bauteile, z.B. zwei L-förmige Platinen, geschnitten werden. Beide Schneidvorrichtungen 5,6 schneiden gleichzeitig jeweils eine L-förmige Kontur in dem Arbeitsbereich 7. Auch auf diese Weise kann in kurzer Zeit eine Vielzahl von Bauteilen geschnitten werden. Das Bandmaterial 1 wird kontinuierlich transportiert und das Zuschneiden der Bauteile erfolgt ebenfalls während des kontinuierlichen Transportes. Dies ist möglich, da beide Schneideinheiten 13,14 unabhängig voneinander aber gleichzeitig unterschiedliche Konturen schneiden können.

Fig. 2 und 3 zeigen einen Ausschnitt einer Vorrichtung 16 mit einer Stütze 15. Diese Vorrichtung 16 kann nach dem beschriebenen Verfahren betrieben werden, wobei das Obertrum 2 während des Verfahrens zwischen den Schneideinheiten 13,14 optimal abgestützt wird. Die Stütze 15 ist an die Schneideinheiten 13,14 angekoppelt, die bei einer Bewegung der Schneideinheiten 13,14 voneinander weg auseinandergestreckt wird, wie Fig. 3 zeigt, und bei einer Bewegung der Schneideinheiten 13,14 aufeinander zu komprimiert wird, wie in Fig. 2 gezeigt ist und jeweils den Bereich des Obertrums 2 zwischen den Schneideinheiten 13,14 abstützt.

### Bezugszeichenliste:

- 1: Bandmaterial
- 2: Obertrum
- 3: Fördereinrichtung
- 4: Förderrichtung
- 5: Schneidvorrichtung
- 6: Schneidvorrichtung
- 7: Arbeitsbereich
- 8: Untertrum
- 9: Schacht
- 10: Schacht
- 11: Auffangbehälter
- 12: Auffangbehälter
- 13: Schneideinheit
- 14: Schneideinheit
- 15: Stütze
- 16: Vorrichtung
- 17: Umlenkrollen (Fördereinrichtung)
- 18: Aussparung
- 19: Aussparung

## Patentansprüche

1. Verfahren zum Schneiden von Metall, vorzugsweise von Bandmaterial (1) oder plattförmigen Werkstücken, wobei das Material (1) über ein Obertrum (2) einer umlaufend angetriebenen Fördereinrichtung (3) in einer Förderrichtung (4) transportiert wird und während des Transports durch mindestens zwei oberhalb des Obertrums (2) angeordnete Schneidvorrichtungen (5,6) in einem Arbeitsbereich (7), der über eine Länge des Obertrums (2) verläuft, in Bauteile geschnitten wird, wobei das Obertrum (2) jeweils in den Schneidbereichen der Schneidvorrichtungen (5,6) zu einem in Richtung des Untertrums (8) der Fördereinrichtung (3) ausgebildeten Schachts (9,10) mit einem darin angeordneten Auffangbehälter (11,12) umgelenkt wird, wobei jede Schneidvorrichtung (5,6) mit einem Schacht (9,10) und einem Auffangbehälter (11,12) eine Schneideinheit (13,14) bildet, und sich die mindestens zwei Schneideinheiten (13,14) unabhängig voneinander im gesamten Arbeitsbereich (7) bewegen und während eines Schneidzyklus voneinander unterschiedliche oder auch gleiche Konturen schneiden.

2. Verfahren nach Anspruch 1, **dadurch gekennzeichnet, dass** das Material (1) kontinuierlich transportiert wird und das Zuschneiden der Bauteile während des kontinuierlichen Transportes erfolgt.

3. Verfahren nach Anspruch 1 oder 2, **dadurch gekennzeichnet, dass** während eines Schneidzyklus mindestens ein Bauteil geschnitten wird.

4. Verfahren nach einem der Ansprüche 1 bis 3, **dadurch gekennzeichnet, dass** während eines Schneidzyklus mehrere Bauteile mit unterschiedlichen Konturen geschnitten werden.

5. Verfahren nach einem der Ansprüche 1 bis 4, **dadurch gekennzeichnet, dass** das Obertrum (2) zwischen den Schneideinheiten (13,14) abstützt wird, wobei eine Stütze (15) an die Schneideinheiten (13,14) deren Abstand voneinander folgend angekoppelt ist, die bei einer Bewegung der Schneideinheiten (13,14) voneinander weg auseinandergestreckt wird und bei einer Bewegung der Schneideinheiten (13,14) aufeinander zu komprimiert wird und jeweils den Bereich des Obertrums (2) zwischen den Schneideinheiten (13,14) abstützt.

6. Vorrichtung (16) zum Schneiden von Metall, vorzugsweise von Bandmaterial (1) oder plattenförmigen Werkstücken, insbesondere zur Durchführung eines Verfahrens nach einem der Ansprüche 1 bis 5, wobei die Vorrichtung (16) eine bandförmige um mindestens zwei Umlenkrollen (17) umlaufend geführte Fördereinrichtung (3) mit einem Obertrum (2) und einem Untertrum (8) aufweist, wobei das Material (1) über das Obertrum (2) in einer Förderrichtung (4) durch die Vorrichtung (16) geführt und befördert ist und in einem Arbeitsbereich (7), der zwischen den Umlenkungen (17) der umlaufenden Fördereinrichtung (3) über die Länge des Obertrums (2) verläuft, bearbeitet ist, wobei die Vorrichtung (16) mindestens zwei Schneidvorrichtungen (5,6) zum Schneiden des Materials (1) aufweist, die oberhalb des Obertrums (2) und des darüber beförderten Materials (1) angeordnet sind, und wobei das Obertrum (2) jeweils in den Schneidbereichen der Schneidvorrichtungen (5,6) zu einem in Richtung des Untertrums (8) ausgebildeten Schachts (9,10) umgelenkt ist, in dem jeweils ein Auffangbehälter (11,12) zum Auffangen von Schneidabfällen angeordnet ist, wobei jede Schneidvorrichtung (5,6) mit einem Schacht (11,12) und einem Auffangbehälter (11,12) zu einer Schneideinheit (13,14) gekoppelt ist, und die Schneideinheiten (13,14) unabhängig voneinander im gesamten Arbeitsbereich (7) beliebig bewegbar angeordnet sind, wobei mit den Schneideinheiten (13,14) voneinander unterschiedliche oder auch gleiche Konturen geschnitten sind.

7. Vorrichtung nach Anspruch 6, **dadurch gekennzeichnet, dass** die Schneidvorrichtungen (5,6) Laserschneider sind.

8. Vorrichtung nach Anspruch 6 oder 7, **dadurch gekennzeichnet, dass** die Schächte (9,10) v-förmig sind.

9. Vorrichtung nach Anspruch 6 oder 7, **dadurch gekennzeichnet, dass** die Schächte (9,10) u-förmig sind.

10. Vorrichtung nach einem der Ansprüche 6 bis 9, **dadurch gekennzeichnet, dass** das Obertrum (2) zwischen den Schneideinheiten (13,14) durch eine unterhalb des Obertrums (2) angeordnete Stütze (15) gehalten ist.

11. Vorrichtung nach Anspruch 10, **dadurch gekennzeichnet, dass** die Stütze (15) an die Schneideinheiten (13,14) deren unterschiedlichem Abstand voneinander folgend gekoppelt ist, wobei die Stütze (15) bei voneinander entfernt angeordneten Schneideinheiten (13,14) gestreckt ist und bei angenäherten Schneideinheiten (13,14) komprimiert ist, wobei der Bereich des Obertrums (2) zwischen den Schneideinheiten (13,14) stets durch die Stütze (15) abgestützt ist.

## Claims

1. A method for cutting metal, preferably tape material (1) or plate-shaped workpieces, wherein the material (1) is transported over an upper run (2) of a rotary driven conveyance device (3) in a conveying direction (4) and is cut into components, during the transport, by at least two cutting devices (5, 6) arranged above the upper run (2) in a work region (7) that extends over a length of the upper run (2), wherein the upper run (2) is deflected respectively in the cutting regions of the cutting devices (5, 6) to a duct (9, 10) formed in the direction of the lower run (8) of the conveyance device (3) and including a collecting container (11, 12) arranged therein, wherein each cutting device (5, 6) with a duct (9, 10) and a collecting container (11, 12) forms a cutting unit (13, 14), and the at least two cutting units (13, 14) move independently from each other in the complete work region (7) and cut different or also identical contours during a cutting cycle.

2. The method according to claim 1, **characterized by** that the material (1) is continuously transported, and cutting of the components occurs during the continuous transport.

3. The method according to claim 1 or 2, **characterized by** that at least one component is cut during a cutting cycle.

4. The method according to one of claims 1 to 3, **characterized by** that several components having different contours are cut during a cutting cycle.

5. The method according to one of claims 1 to 4, **characterized by** that the upper run (2) is supported between the cutting units (13, 14), wherein a support (15) is coupled to the cutting units (13, 14) following the distance from each other, said support (15) being expanded upon a movement of the cutting units (13, 14) away from each other and being compressed upon a movement of the cutting units (13, 14) toward each other and respectively supports the region of the upper run (2) between the cutting units (13, 14).

6. A device (16) for cutting metal, preferably tape material (1) or plate-shaped workpieces, in particular for carrying-out a method according to one of claims 1 to 5, wherein the device (16) includes a tape-shaped conveyance device (3) circumferentially guided about at least two return rollers (17) with an upper run (2) and a lower run (8), wherein the material (1) is guided and conveyed over the upper run (2) in a conveying direction (4) by the device (16) and is processed in a work region (7) that extends between the deflections (17) of the rotary driven conveyance device (3) over the length of the upper run (2), wherein the device (16) includes at least two cutting devices (5, 6) for cutting the material (1) that are arranged above the upper run (2) and the material (1) conveyed therewith, and wherein the upper run (2) is deflected respectively in the cutting regions of the cutting devices (5, 6) to a duct (9, 10) formed in the direction of the lower run (8), in which a collecting container (11, 12) for collecting cutting wastes is arranged, wherein each cutting device (5, 6) with a duct (11, 12) and a collecting container (11, 12) is coupled to a cutting unit (13, 14), and the cutting units (13, 14) are arranged independently from each other in the complete work region (7) in an arbitrarily movable manner, wherein different or also identical contours are cut by the cutting units (13, 14).

7. The device according to claim 6, **characterized by** that the cutting devices (5, 6) are laser cutters.

8. The device according to claim 6 or 7, **characterized by** that the ducts (9, 10) are v-shaped.

9. The device according to claim 6 or 7, **characterized by** that the ducts (9, 10) are u-shaped.

10. The device according to one of claims 6 to 9, **characterized by** that the upper run (2) is held between the cutting units (13, 14) by a support (15) arranged below the upper run (2).

11. The device according to claim 10, **characterized by** that the support (15) is coupled at the cutting units (13, 14) following their different distances from each other, wherein the support (15) is expanded when the cutting units (13, 14) are arranged spaced from each other and is compressed when the cutting units (13, 14) are brought closer together, wherein the region of the upper run (2) between the cutting units (13, 14) is always supported by the support (15).

## Revendications

1. Procédé de coupe du métal, de préférence d'un matériau de bande (1) ou de pièces en forme de plaques, dans lequel le matériau (1) est transporté sur un brin supérieur (2) d'un convoyeur (3) périphériquement entraîné selon une direction de convoyage (4) et est coupé en des composants, pendant le transport, par au moins deux appareils de coupe (5, 6) arrangés au-dessus du brin supérieur (2) dans une zone de travail (7) qui s'étend sur une longueur du brin supérieur (2), dans lequel le brin supérieur (2) est dévié respectivement dans les régions de coupe des appareils de coupe (5, 6) à une cheminée (9, 10) réalisée en direction du brin inférieur (8) du convoyeur (3) et comportant un collecteur (11, 12) arrangé là-dedans, dans lequel chaque appareil de coupe (5, 6) avec une cheminée (9, 10) et un collecteur (11, 12) forme une unité de coupe (13, 14), et les au moins deux unités de coupe (13, 14) se meuvent indépendamment dans la zone de travail (7) complète et coupent des contours différents ou aussi identiques pendant un cycle de coupe.

2. Procédé selon la revendication 1, **caractérisé en ce que** le matériau (1) est transporté en continu, et la coupe des composants se fait pendant le transport continu.

3. Procédé selon la revendication 1 ou 2, **caractérisé en ce qu'**au moins un composant est coupé pendant un cycle de coupe.

4. Procédé selon une des revendications 1 à 3, **caractérisé en ce que** plusieurs composants ayant des contours différents sont coupés pendant un cycle de coupe.

5. Procédé selon une des revendications 1 à 4, **caractérisé en ce que** le brin supérieur (2) est soutenu entre les unités de coupe (13, 14), dans lequel un support (15) est couplé aux unités de coupe (13, 14) en suivant la distance entre elles, ce support (15) étant étiré lors d'un mouvement des unités de coupe (13, 14) en écartement l'une de l'autre et étant comprimé lors d'un mouvement des unités de coupe (13, 14) l'une vers l'autre et respectivement soutient la zone du brin supérieur (2) entre les unités de coupe (13, 14).

6. Dispositif (16) de coupe du métal, de préférence d'un matériau de bande (1) ou de pièces en forme de plaques, en particulier pour la mise en œuvre d'un procédé selon une des revendications 1 à 5, dans lequel le dispositif (16) comporte un convoyeur (3) en forme de bande périphériquement guidé autour d'au moins deux poulies de renvoi (17) avec un brin supérieur (2) et un brin inférieur (8), dans lequel le matériau (1) est guidé et convoyé sur le brin supérieur (2) selon une direction de convoyage (4) par le dispositif (16) et est usiné dans une zone de travail (7) qui s'étend entre les déviations (17) du convoyeur (3) périphériquement entraîné sur la longueur du brin supérieur (2), dans lequel le dispositif (16) comporte au moins deux appareils de coupe (5, 6) pour couper le matériau (1) qui sont arrangés au-dessus du brin supérieur (2) et le matériau (1) convoyé par celui-ci, et dans lequel le brin supérieur (2) est dévié respectivement dans les régions de coupe des appareils de coupe (5, 6) à une cheminée (9, 10) réalisée en direction du brin inférieur (8), dans laquelle un collecteur (11, 12) pour ramasser des déchets de coupe est arrangé, dans lequel chaque appareil de coupe (5, 6) avec une cheminée (11, 12) et un collecteur (11, 12) est couplé à une unité de coupe (13, 14), et les unités de coupe (13, 14) sont arrangées indépendamment dans la zone de travail (7) complète de façon arbitrairement mobile, dans lequel des contours différents ou aussi identiques sont coupés par les unités de coupe (13, 14).

7. Dispositif selon la revendication 6, **caractérisé en ce que** les appareils de coupe (5, 6) sont des dispositifs de coupe au laser.

8. Dispositif selon la revendication 6 ou 7, **caractérisé en ce que** les cheminées (9, 10) sont en forme de v.

9. Dispositif selon la revendication 6 ou 7, **caractérisé en ce que** les cheminées (9, 10) sont en forme d'u.

10. Dispositif selon une des revendications 6 à 9, **caractérisé en ce que** le brin supérieur (2) est retenu entre les unités de coupe (13, 14) par un support (15) arrangé au-dessous du brin supérieur (2) .

11. Dispositif selon la revendication 10, **caractérisé en ce que** le support (15) est couplé aux unités de coupe (13, 14) en suivant leurs distances différentes entre elles, dans lequel le support (15) est étiré si les unités de coupe (13, 14) sont séparées l'une de l'autre et est comprimé si les unités de coupe (13, 14) sont rapprochées, dans lequel la zone du brin supérieur (2) entre les unités de coupe (13, 14) est toujours soutenue par le support (15).
